# EUROPÄISCHE PATENTSCHRIFT

(11) **EP 3 347 258 B1**
(45) Veröffentlichungstag und Bekanntmachung des Hinweises auf die Patenterteilung: **27.11.2019**
(21) Anmeldenummer: 16756676.9
(22) Anmeldetag: 22.08.2016
(51) Int. Cl.: B62D 5/04

(54) **NUTZFAHRZEUGLENKUNG**
UTILITY VEHICLE STEERING SYSTEM
DIRECTION DE VÉHICULE UTILITAIRE

(30) Priorität: 07.09.2015 DE 102015217045
(43) Veröffentlichungstag der Anmeldung: 18.07.2018
(73) Patentinhaber: Volkswagen Aktiengesellschaft, 38440 Wolfsburg (DE)
(72) Erfinder: WILSKE, Ernst, 39291 Nedlitz (DE); ROGALL, Jens, 38302 Wolfenbüttel (DE); BLUMBERG, Stefan, 38126 Braunschweig (DE)
(86) Internationale Anmeldenummer: PCT/EP2016/069763
(87) Internationale Veröffentlichungsnummer: WO 2017/042020

(56) Entgegenhaltungen:
- EP-A2- 1 354 787
- CN-A- 1 647 984
- DE-A1- 4 236 771
- DE-A1-102012 204 318
- DE-B3- 10 234 596
- DE-U1-202014 101 670
- US-A1- 2013 032 430

## Beschreibung

Die Erfindung bezieht sich auf eine Nutzfahrzeuglenkung, umfassend ein Lenkgetriebe zur Übertragung eines an einem Lenkrad aufgebrachten Handmoments an einen Lenkstockhebel, das einen Elektromotor zur Bereitstellung eines Hilfsmoments zur Lenkunterstützung aufweist, wobei die Lenkunterstützung über den gesamten Betriebsbereich der Lenkung ausschließlich elektrisch bereitgestellt wird.

Nutzfahrzeuglenkung müssen im Unterschied zu Lenkungen für Personenkraftfahrzeuge aufgrund der höheren Vorderachslasten deutlich höhere Lenkkräfte bereitstellen, so dass Lenkungskonzepte, wie sie für Personenkraftfahrzeugen üblich sind, sich nicht auf Nutzfahrzeuge übertragen lassen. Hinzu kommt aufgrund der unterschiedlichen räumlichen Gegebenheiten im Fahrzeug eine deutliche veränderte Einbausituation.

Nutzfahrzeuglenkungen werden daher oftmals mit einem blockartigen Lenkgetriebe ausgeführt, an das ausgangsseitig ein Lenkstockhebel angeschlossen ist. Ein eingangsseitig in das Lenkgetriebe eingeleitetes Handmoment des Fahrers wird durch dieses Lenkgetriebe in eine Schwenkbewegung des Lenkstockhebels umgesetzt.

Aus DE 20 2004 021 588 U1 ist eine Nutzfahrzeuglenkung bekannt, die sowohl eine elektrische Hilfskraftunterstützung als auch eine hydraulische Hilfskraftunterstützung aufweist. Das Handmoment des Fahrers wird dabei über einen Drehstab in eine Spindel eingeleitet, welche über eine endlose Kugelkette mit einem axial verlagerbaren Kolben in Eingriff steht. Eine am Außenumfang des Kolbens vorgesehene Verzahnung kämmt mit einer Abtriebssegmentwelle, welche mit dem Lenkstockhebel verbunden ist, um die Axialbewegung des Kolbens in eine Schwenkbewegung des Lenkstockhebels umzusetzen. Der innerhalb der Spindel angeordnete Drehstab betätigt über einen Drehschieber eine Ventilanordnung eines Hydraulikkreises. Der Hydraulikkreis erzeugt durch eine Pumpe einen hydraulischen Druck und beaufschlagt den Kolben, welcher zusätzlich zum Handmoment eine Unterstützungskraft bereitstellt. Die elektrische Hilfskraftunterstützung wird durch einen Elektromotor bereitgestellt, der über ein Wellgetriebe mit der Spindel gekoppelt ist. Der Elektromotor ist sitzt dabei außenseitig an einem Lenkgetriebegehäuse vor der Spindel.

Gewöhnlich erzeugen derartige Elektromotoren unter Berücksichtigung einer im Nutzfahrzeugbereich üblichen Bordnetzspannung von 24 V ein Antriebsmoment von 2 Nm, so dass sich unter Berücksichtigung einer Getriebeübersetzung des Wellgetriebes von i=50 ein Drehmoment von rund 100 Nm erzielen lässt. Der hydraulische Anteil der Hilfskraftunterstützung entspricht hingegen einem deutlich höheren Drehmoment von etwa 7600 Nm.

Eine derartige Nutzfahrzeuglenkung ist wegen des Kugelgewindetriebs und des benötigten Hydrauliksystems konstruktiv aufwändig. Zudem bedingt das Hydrauliksystem einen erheblichen Bauraumbedarf.

Wie in DE 20 2004 021 588 U1 ausgeführt wird, erfordert eine stets leistungsbereite hydraulische Hilfskraftunterstützung eine Leistung von ca. 1000 W, was sich in einem entsprechenden Kraftstoffmehrverbrauch niederschlägt. In DE 20 2004 021 588 U1 wird als Abhilfe vorgeschlagen, die hydraulische Hilfskraftunterstützung in bestimmten Fällen abzuschalten, so dass lediglich die elektrische Hilfskraftunterstützung zum Einsatz kommt. Erst wenn höhere Lenkkräfte benötigt werden, wird die hydraulische Hilfskraftunterstützung zugeschaltet.

Weiterhin ist aus DE 100 39 574 A1 eine Nutzfahrzeuglenkung der eingangs genannten Art mit rein elektrischer Hilfskraftunterstützung bekannt. Hierdurch wird der Aufwand für ein zusätzliches hydraulisches System vermieden. Aus Redundanzgründen ist die Nutzfahrzeuglenkung gemäß DE 100 39 574 A1 mit zwei Elektromotoren ausgestattet, was wiederum einen erhöhten Bauraumbedarf und Fertigungsaufwand bedeutet.

Aus der CN 1 647 984 geht eine Nutzfahrzeuglenkung hervor, die Lenkgetriebe zur Übertragung eines an einem Lenkrad aufgebrachten Handmoments an einen Lenkstockhebel umfasst. Es ist vorgesehen, dass ein Elektromotor ein Hilfsmoments zur Lenkunterstützung bereitstellt, wobei die Lenkunterstützung über den gesamten Betriebsbereich der Lenkung ausschließlich elektrisch bereitgestellt wird. Eingangswelle und Ausgangswelle des Lenkgetriebes weisen zueinander windschiefe Drehachsen auf. Eine erste Getriebeeinrichtung koppelt die Eingangswelle mit der Ausgangswelle und eine zweite Getriebeeinrichtung, an welche eingangsseitig der Elektromotor angeschlossen ist, weist eine ins Langsame übersetzende Getriebestufe in der Form eines hoch übersetzenden koaxialen Getriebes auf.

Der vorliegenden Erfindung liegt die Aufgabe zugrunde, eine Nutzfahrzeuglenkung vom Typ der vorgenannten Art unter Beibehaltung hoher Lenkungskräfte sowie einer kompakten Bauweise im Hinblick auf einen verringerten konstruktiven Aufwand weiterzuentwickeln.

Diese Aufgabe wird durch eine Nutzfahrzeuglenkung gemäß Patentanspruch 1 gelöst. Die erfindungsgemäße Nutzfahrzeuglenkung umfasst ein Lenkgetriebe zur Übertragung eines an einem Lenkrad aufgebrachten Handmoments an einen Lenkstockhebel, welches im Folgenden aufweist:
- einen Elektromotor zur Bereitstellung eines Hilfsmoments zur Lenkunterstützung, wobei die Lenkunterstützung über den gesamten Betriebsbereich der Lenkung ausschließlich elektrisch bereitgestellt wird,
- eine Eingangswelle und eine Ausgangswelle, deren Drehachsen zueinander windschief sind,
- eine erste Getriebeeinrichtung, welche die Eingangswelle mit der Ausgangswelle koppelt, und
- eine zweite Getriebeeinrichtung, an welche eingangsseitig der Elektromotor angeschlossen ist und welche eine ins Langsame übersetzende Getriebestufe in der Form eines hoch übersetzenden koaxialen Getriebes aufweist, wobei die zweite Getriebeeinrichtung ausgangsseitig mit der Ausgangswelle gekoppelt ist und deren ins Langsame übersetzende Getriebestufe in Form des hoch übersetzenden koaxialen Getriebes koaxial zu der Ausgangswelle angeordnet ist.

Es hat sich gezeigt, dass sich mit einer solchen Anordnung eine besonders kompakte Nutzfahrzeuglenkung darstellen lässt, welche die Bereitstellung großer Drehmomente durch einen elektromotorischen Antrieb bei einem begrenzten Bauraum ermöglicht.

Die erfindungsgemäße Nutzfahrzeuglenkung eignet sich insbesondere für nichtschienengebundene Kraftfahrzeuge mit Vorderachslasten von mehr als 2,5 t.

Die Hilfskraftunterstützung erfolgt rein elektrisch, so dass keine hydraulischen Komponenten benötigt werden. Dabei können mit der derzeit üblichen Bordnetzspannung von 24V am Lenkstockhebel Drehmomente in der Größenordnung von etwa 8000 Nm bereitgestellt werden.

Über den Lenkstockhebel werden die Lenkbefehle aus dem Lenkgetriebe beispielsweise über ein Spurstangengestänge zu den Schwenklagern der gelenkten Räder übertragen.

Weitere Ausgestaltungen der Erfindung sind in den Patentansprüchen angegeben.

Vorzugsweise ist die zur Ausgangswelle koaxiale Getriebestufe der zweiten Getriebeeinrichtung ein Exzentergetriebe mit Verzahnung, ein Exzentergetriebe mit Evolventenverzahnung oder ein Zykloidgetriebe. Hierdurch lassen sich bei kompakten Abmessungen sehr große Übersetzungsverhältnisse erzielen, so dass in der zweiten Getriebeeinrichtung eine Gesamtübersetzung größer als 1:320 mit einer geringen Anzahl von Getriebestufen verwirklicht werden kann. Besonders vorteilhaft ist es dabei, wenn als Zykloidgetriebe ein Kurvenscheibengetriebe verwendet wird.

Zykloidgetriebe bauen aufgrund der beschränkten Miniaturisierbarkeit der Rollen immer noch verhältnismäßig groß, wenn einstufig hohe Übersetzungsverhältnisse bis etwa 1:100 benötigt werden. Exzentergetriebe mit Evolventenverzahnung bieten hier zusätzliche Vorteile. Die Verzahnung ist bei kleinen Zähnezahldifferenzen flächentragend. Zudem wird die Last durch eine größere Anzahl von Zähnen gleichzeitig getragen.

Gemäß einer Ausführungsvariante weist die zweite Getriebeeinrichtung zwei Getriebestufen auf, welche jeweils als ins Langsame übersetzende Getriebestufen in Form eines hoch übersetzenden koaxialen Getriebes ausgebildet sind. Hierdurch lässt sich eine Gesamtübersetzung größer als 1:320 mittels sehr kompakten Getriebestufen erzielen.

Dabei sind vorzugsweise beide Getriebestufen der zweiten Getriebeeinrichtung entweder als einstufige Exzentergetriebe oder als einstufige Zykloidgetriebe ausgebildet. Zudem kann für beide Getriebestufen ein gemeinsames Hohlrad vorgesehen sein, mit dem die Innenscheiben beider Getriebestufen jeweils in Eingriff stehen. Hierdurch wird eine weitere Reduzierung des Bauraums der zweiten Getriebeeinrichtung erzielt.

Weiterhin können beide Getriebestufen der zweiten Getriebeeinrichtung ein gleiches oder annähernd gleiches einstufiges Übersetzungsverhältnis jeweils im Bereich von 1:18 bis 1:25 aufweisen. Dies ist unter räumlichen Gesichtspunkten, insbesondere bei einer unmittelbaren axialen Hintereinanderschaltung beider Getriebestufen, sowie für die Geräuschentwicklung günstig.

In einer weiteren Ausführungsvariante ist der Elektromotor koaxial zu der Ausgangswelle angeordnet. Er kann hierdurch sehr vorteilhaft mit der zweiten Getriebeeinrichtung oder zumindest eine Getriebestufe derselben zu einer Baueinheit zusammengefasst werden.

Gemäß einer weiteren Ausführungsvariante weist die zweite Getriebeeinrichtung zwischen dem Elektromotor und dem hoch übersetzenden koaxialen Getriebe eine Getriebestufe in Form eines ins Langsame übersetzenden Riementriebs, Planetengetriebes, Kegelradgetriebes oder Hypoidgetriebes auf. Hierdurch ist es möglich, die Lage des Elektromotors an die jeweilige Einbausituation anzupassen. So kann dieser insbesondere auch achsparallel zu der Ausgangswelle oder mit seiner Drehachse quer zur Drehachse der Ausgangswelle angeordnet werden. Vorteilhaft kann an dieser Stelle aber auch ein Stirnradgetriebe verwendet werden.

Weiterhin kann die zweite Getriebeeinrichtung derart konfiguriert werden, dass eine bzw. die zusätzliche Getriebestufe zwischen dem Elektromotor und dem hoch übersetzenden koaxialen Getriebe ein Übersetzungsverhältnis ins Langsame kleiner als 1:8 aufweist, während das hoch übersetzende koaxiale Getriebe ein Übersetzungsverhältnis ins Langsame größer als 1:60 aufweist, so dass eine Gesamtübersetzung größer als 1:320 möglich ist. Ein hoch übersetzendes koaxiales Getriebe kann in diesem Fall noch einstufig ausgeführt werden, um eine axial besonders kurze Ausführung zu erzielen. Zudem kann hierbei, beispielsweise in Kombination mit einem Riementrieb, der Elektromotor beliebig um die Ausgangswelle angeordnet und flexibel in einen bestehenden Bauraum eingepasst werden.

Gemäß einer weiteren Ausführungsvariante ist an der Abtriebswelle eine Verzahnungsstruktur als Bestandteil der ersten Getriebeeinrichtung befestigt oder ausgebildet, so dass das Hilfsmoment des Elektromotors mit geringem Aufwand mit dem Handmoment vom Lenkrad zusammengeführt wird.

Gemäß einer weiteren Ausführungsvariante weist die erste Getriebeeinrichtung zwei Getriebestufen auf, nämlich eine erste Getriebestufe zur Übersetzung einer Drehbewegung der Eingangswelle um deren Drehachse in eine Translationsbewegung eines Zwischenglieds, sowie eine zweite Getriebestufe zur Übersetzung der Translationsbewegung des Zwischenglieds in eine Drehbewegung der Ausgangswelle um deren Drehachse, wobei das Übersetzungsverhältnis der ersten Getriebeeinrichtung ins Langsame im Bereich von 1:10 bis 1:40 liegt.

In einer weiteren Ausführungsvariante sind zwischen Mitnehmern und Öffnungen der Innenscheibe des Exzenter- oder Zykloidgetriebes zylindrische Bohrbuchsen angeordnet, welche die hier üblicherweise verwendeten Wälzlager ersetzen oder ergänzen.

Gemäß einer weiteren Ausführungsvariante ist die erste Getriebeeinrichtung hingegen mit genau einer Getriebestufe ausgebildet, wodurch diese fertigungs- und montagetechnisch erheblich vereinfacht wird. Diese eine Getriebestufe übersetzt einstufig eine Drehbewegung der Eingangswelle um deren Drehachse in eine Drehbewegung der Ausgangswelle um deren Drehachse.

Hierfür besonders geeignet sind ein Schneckentrieb, ein Kegelradgetriebe oder ein Hypoidgetriebe, durch welche ein Drehwinkelbereich von 900° an der Eingangswelle auf einen Drehwinkelbereich von etwa 45° bis 90°, vorzugsweise 45° bis 60° an der Ausgangswelle sowie am Lenkstockhebel reduziert werden kann. Vorteilhaft kann an dieser Stelle aber auch ein Kugelgewindetrieb verwendet werden.

Weiterhin kann an der Eingangswelle eingangsseitig ein Drehmomentsensor angeordnet sein, um das vom Fahrer aufgebrachte Handmoment zu erfassen und dementsprechend den Elektromotor anzusteuern.

Gemäß einer weiteren Ausführungsvariante nimmt ein Lenkgetriebegehäuse die Eingangswelle, die Ausgangswelle, die erste Getriebeeinrichtung und zumindest das hoch übersetzende koaxiale Getriebe der zweiten Getriebeeinrichtung auf, wodurch sich eine vormontierbare Baueinheit ergibt, die als solche am Fahrzeug verbaut werden kann.

Weiterhin kann der Elektromotor ebenfalls in eine solche Baueinheit einbezogen werden und dazu vorzugsweise in dem Lenkgetriebegehäuse aufgenommen sein.

Zudem ist es möglich, Teile des Elektromotors, wie beispielsweise dessen Stator, durch Abschnitte des Lenkgetriebegehäuses zu bilden, wodurch sich das Gesamtgewicht des Lenkgetriebes verringern lässt

Vorzugsweise wird die Lenkunterstützung über den gesamten Betriebsbereich der Lenkung allein durch einen einzigen Elektromotor bereitgestellt, so dass sich im Vergleich zu DE 100 39 574 A1 deutliche Bauraumvorteile ergeben.

Weiterhin kann der Elektromotor einen Stator mit mindestens zwei elektrischen getrennten Wicklungsgruppen aufweist, welche jeweils durch eine eigene elektronische Steuereinrichtung angesteuert sind. Die ermöglicht bei Verwendung eines kompakten schnell laufenden Elektromotors eine Erhöhung des vom Elektromotor bereitgestellten Drehmoments aus dem Fahrzeugbordnetz.

Gemäß einer weiteren Ausführungsvariante weist die Getriebestufe, über welche die erste Getriebeeinrichtung an der Ausgangswelle angreift, ein variables Übersetzungsverhältnis derart auf, dass in einem näher zur Mittellage der Lenkung gelegenen Bereich Lenkbewegungen am Lenkrad weniger große Radeinschläge bewirken als Lenkbewegungen in einem von der Mittellage weiter entfernten Bereich. Dadurch können beim Geradeausfahren große Lenkbewegungen bei kleinem Radeinschlag und beim Einparken kleine Lenkbewegungen bei großem Radeinschlag erzielt werden, um dem Fahrer die Handhabung des Fahrzeugs zu erleichtern.

Nachfolgend wird die Erfindung anhand von in der Zeichnung dargestellten Ausführungsbeispielen näher erläutert. Die Zeichnung zeigt in:
- Figur 1: eine räumliche Ansicht eines ersten Ausführungsbeispiels einer Nutzfahrzeuglenkung nach der Erfindung,
- Figur 2: eine schematische Ansicht der Anordnung einer erfindungsgemäßen Nutzfahrzeuglenkung an einem Nutzfahrzeug,
- Figur 3: eine Längsschnittansicht des Lenkgetriebes des ersten Ausführungsbeispiels entlang dessen Eingangswelle,
- Figur 4: eine weitere Schnittansichten des Lenkgetriebes des ersten Ausführungsbeispiels,
- Figur 5: eine Längsschnittansicht des Lenkgetriebes des ersten Ausführungsbeispiels entlang dessen Ausgangswelle,
- Figur 6: eine Querschnittsansicht der zweiten Getriebeeinrichtung quer zur Ausgangswelle,
- Figur 7: eine Ansicht entsprechend Figur 2 für ein zweites Ausführungsbeispiel,
- Figur 8: eine räumliche Teilansicht einer weiteren Ausführungsform für die zweite Getriebeeinrichtung eines dritten Ausführungsbeispiels,
- Figur 9: eine Längsschnittansicht durch die zweite Getriebeeinrichtung gemäß Figur 8,
- Figur 10: eine Querschnittsansicht der zweiten Getriebeeinrichtung gemäß Figur 8,
- Figur 11: eine alternative Ausführung mit einer Hypozykloide,
- Figur 12: eine zylindrische Bohrbuchse zur alternativen Lagerung der Mitnehmer in einem Exzenter- oder Zykloidgetriebe, und in
- Figur 13: ein viertes Ausführungsbeispiel eines Lenkgetriebes einer erfindungsgemäßen Nutzfahrzeuglenkung.

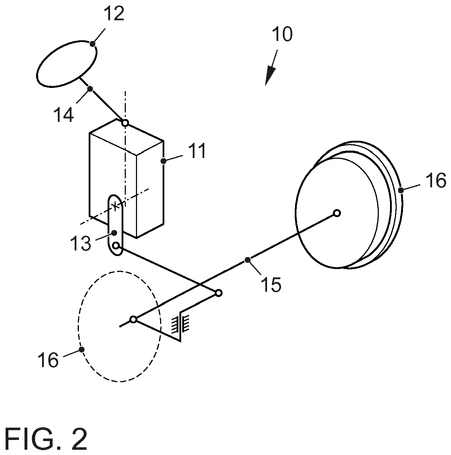

Die Ausführungsbeispiele beziehen sich jeweils auf eine Nutzfahrzeuglenkung 10 vom Typ einer Blocklenkung, welche sich für Vorderachslasten von 2,5 t und mehr eignet. Figur 2 zeigt in schematischer Darstellung deren Anordnung in einem Nutzfahrzeug. Die Nutzfahrzeuglenkung 10 weist ein Lenkgetriebe 11 auf, das dazu bestimmt und ausgebildet ist, um ein vom Fahrer an einem Lenkrad 12 aufgebrachtes Handmoment an einen Lenkstockhebel 13 zu übertragen. Dazu ist das Lenkrad 12 über eine Lenksäule 14 mit einem Eingangsglied des Lenkgetriebes 11 gekoppelt. Der mit einem Ausgangsglied des Lenkgetriebes 11 gekoppelte Lenkstockhebel 13 ist beispielsweise über ein Spurstangengestänge 15 mit den zu lenkenden Rädern 16 des Kraftfahrzeugs verbunden, um eine Schwenkbewegung des Lenkstockhebels 13 an die Räder 16 zu übertragen und damit an diesen einen Lenkeinschlag zu hervorzurufen.

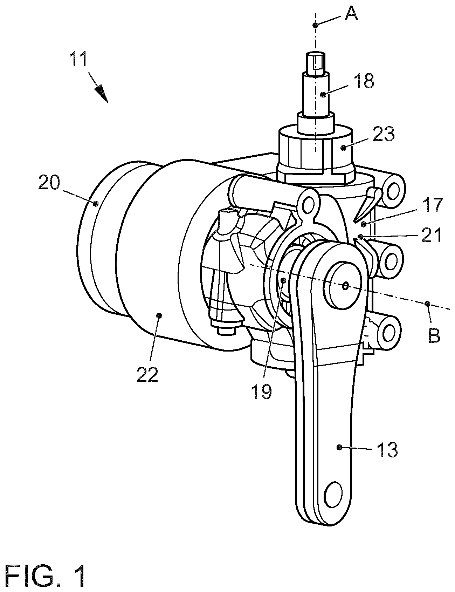

Das Lenkgetriebe 11 des ersten Ausführungsbeispiels, dessen Aufbau in den Figuren 1 sowie 3 bis 6 näher dargestellt ist, umfasst ein Lenkgetriebegehäuse 17, in dem eine Eingangswelle 18 sowie eine Ausgangswelle 19 um Drehachsen A und B drehbar gelagert sind. Über die Eingangswelle 18 wird das Handmoment des Fahrers in das Lenkgetriebe 11 eingeleitet, wohingegen die Ausgangswelle 19 drehfest mit dem Lenkstockhebel 13 gekoppelt ist, um diesen zu verschwenken und somit über das Spurstangengestänge 15 die Fahrzeugräder 16 zu lenken. Die Drehachse B der Ausgangswelle 19 verläuft dabei windschief zur Drehachse A der Eingangswelle 18. Als windschief bezeichnet man zwei Achsen oder Geraden, die sich weder schneiden noch parallel zueinander sind.

Das Lenkgetriebe 11 umfasst weiterhin einen Elektromotor 20 zur Bereitstellung eines Hilfsmoments zur Lenkunterstützung des Fahrers. Bei dem erfindungsgemäßen Lenkungstyp erfolgt die Lenkunterstützung über den gesamten Betriebsbereich der Lenkung vorzugsweise ausschließlich elektrisch. Insbesondere kann auf eine hydraulische Lenkunterstützung verzichtet werden.

Weiterhin umfasst das Lenkgetriebe 11 zwei Getriebeeinrichtungen, eine erste Getriebeeinrichtung 21, welche die Eingangswelle 18 mit der Ausgangswelle 19 koppelt, sowie eine zweite Getriebeeinrichtung 22, an welche eingangsseitig der Elektromotor 20 angeschlossen ist und welche ausgangsseitig mit der Ausgangswelle 19 gekoppelt ist. Das Handmoment wird somit mit dem Übersetzungsverhältnis der ersten Getriebeeinrichtung 21 und das Antriebsmoment des Elektromotors 20 mit dem Übersetzungsverhältnis der zweiten Getriebeeinrichtung 22 an der Ausgangswelle 19 und damit am Lenkstockhebel 13 zur Wirkung gebracht. Beide Getriebeeinrichtungen 21 und 22 bewirken dabei jeweils eine Übersetzung ins Langsame.

Wie oben bereits ausgeführt wurde, wird in einer Nutzfahrzeuglenkung am Lenkstockhebel ein Drehmoment von etwa 8000 Nm benötigt, um bei hohen Vorderachslasten in allen Fahrsituationen, insbesondere auch bei weichem Untergrund, eine gute Handhabung des Fahrzeugs zu ermöglichen. Prinzipiell ist es denkbar, dazu einen Elektromotor mit einem hohen Abtriebsmoment einzusetzen. Dies würde jedoch zu verhältnismäßig großen Abmessungen führen, so dass ein derartiger Ansatz im Rahmen einer Fahrzeuglenkung weniger vorteilhaft erscheint. Auch die Verwendung mehrerer Elektromotoren, wie in DE 100 39 574 A1 vorgeschlagen, benötigt einen großen Bauraum. Herkömmlicherweise wurden daher in der Praxis Hydraulikantriebe zur Bereitstellung hoher Lenkkräfte vorgesehen.

Die Ausführungsbeispiele beschreiten nunmehr einen neuen Weg, welcher es ermöglicht die Hilfskraft mit einem einzigen verhältnismäßig kompakten Elektromotor 20 bereitzustellen, wobei der Bauraumbedarf des Lenkgetriebes 11 insgesamt gleichwohl gering bleibt. Die Verwendung von zwei kompakten Elektromotoren ist gleichwohl nicht ausgeschlossen.

Nachfolgend werden hierzu verschiedene Lenkgetriebekonfigurationen vorgeschlagen. All diesen ist gemeinsam, dass die zweite Getriebeeinrichtung 22 ausgangsseitig mit der Ausgangswelle 19 gekoppelt ist und mindestens eine ins Langsame übersetzende Getriebestufe 221 in der Form eines hoch übersetzenden koaxialen Getriebes aufweist. Diese ins Langsame übersetzende Getriebestufe 221 in Form eines hoch übersetzenden koaxialen Getriebes ist vorliegend koaxial zu der Ausgangswelle 19 angeordnet, um das Antriebsmoment in die Ausgangswelle 19 einzuleiten. Über die zweite Getriebeeinrichtung 22 wird dabei trotz einer sehr kompakten Bauweise eine Gesamtübersetzung ins Langsame von mehr als 1:320 erreicht. Durch Verwendung geeigneter Getriebe sind Gesamtübersetzungen ins Langsame bis zu etwa 1:1600 mit zwei Getriebestufen möglich, ohne dass die Abmessungen der zweiten Getriebeeinrichtung 22 zu stark zunehmen.

Bei dem ersten Ausführungsbeispiel weist die zweite Getriebeeinrichtung 22 zwei axial unmittelbar hintereinanderliegend angeordnete Getriebestufen 221 und 222 auf, welche beide als ins Langsame übersetzende Getriebestufen in Form eines hoch übersetzenden koaxialen Getriebes ausgebildet sind. Der Elektromotor 20 ist dabei koaxial zu der zweiten Getriebeeinrichtung 22 angeordnet. Seine Drehachse liegt somit auf der Drehachse B der Abtriebswelle 19. Hierdurch ergibt sich eine sehr kompakte Einheit aus Elektromotor 20 und zweiter Getriebeeinrichtung 22.

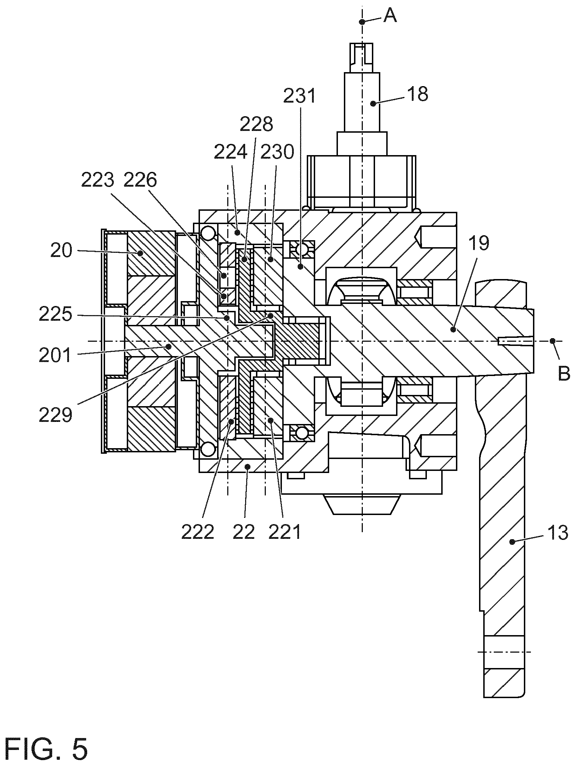

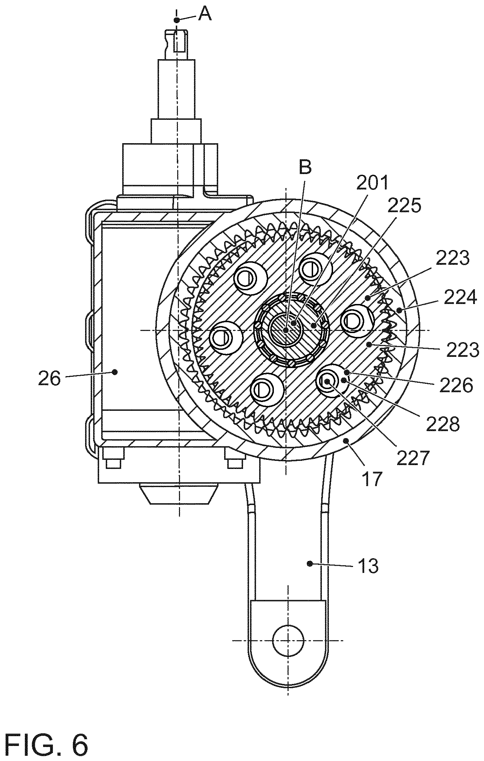

Zur Darstellung eines hohen Übersetzungsverhältnisses ins Langsame sind die Getriebestufen 221 und 222 der zweiten Getriebeeinrichtung als Exzentergetriebe mit Verzahnung, vorzugsweise als Exzentergetriebe mit Evolventenverzahnung ausgebildet, wie dies in den Figuren 5 und 6 gut zu erkennen ist.

Das hoch übersetzende koaxiale Getriebe der motorseitigen zweiten Getriebestufe 222 weist mindestens ein Innenrad 223 auf, das an seinem Außenumfang eine Evolventenverzahnung trägt, die mit einem Hohlrad 224 partiell in Eingriff steht und in dem Hohlrad umlaufen kann. Das Innenrad wird durch 223 durch einen zur Abtriebswelle 201 des Elektromotors 20 exzentrischen Wellenabsatz 225 angetrieben, so dass das Innenrad 223 in dem Hohlrad 224 umläuft. Das Innenrad weist weiterhin mehrere axiale Öffnungen 226 auf, in welche im Durchmesser kleinere Mitnehmer 227 eines Ausgangsglieds 228 der zweiten Getriebestufe 222 eingreifen. Wird der Elektromotor 20 in Betrieb gesetzt, um dessen Abtriebswelle zu drehen, nimmt diese das Innenrad 223 in Drehrichtung mit. Das Innenrad 223 wälzt dabei am Hohlrad 224 ab. Die Öffnungen 226 des Innenrades 223 treffen mit den Mitnehmern 227 des Ausgangsglieds 228 in Kontakt und nehmen diese entsprechend mit, so dass das Ausgangsglied 228 um die Drehachse B dreht. Bei einer einstufigen Ausführung der zweiten Getriebeeinrichtung 22 würde dieses Ausgangsglied 228 unmittelbar die Ausgangswelle 19 des Lenkgetriebes 11 antreiben. Vorliegend ist jedoch eine weitere, nämlich die erste Getriebestufe 221 eingegliedert, welche bei dem Ausführungsbeispiel ebenfalls ein Exzentergetriebe mit Evolventenverzahnung ist. Das Ausgangsglied 228 weist hierbei einen exzentrischen Wellenabsatz 229 zum Antrieb des zweiten Innenrads 230 auf. Dieses kämmt wiederum mit dem Hohlrad 224, um über Öffnungen Mitnehmer am Ausgangsglied 231 der ersten Getriebestufe 221 um die Drehachse B zu drehen und hierdurch letztlich die Ausgangswelle 19 anzutreiben. Das Ausgangsglied kann als scheibenförmiger Träger ausgebildet sein, von dem die Mitnehmer axial in Richtung der Öffnungen abstehen. Ferner kann das Ausgangsglied 231, wie vorliegend dargestellt, integral mit der Ausgangswelle 19 ausgebildet sein, jedoch auch an einer solchen befestigt oder anderweitig mit dieser verbunden sein.

Bei der in den Figuren 5 und 6 dargestellten Ausführungsvariante sind die Innenräder 223 und 230 der beiden Getriebestufen 221 und 222 so ausgelegt und angeordnet, dass lediglich ein gemeinsames Hohlrad 224 benötigt wird. Beide Getriebestufen können so mit einem gleichen oder annähernd gleichen Übersetzungsverhältnis ausgeführt werden, das für eine Nutzfahrzeuglenkung vorzugsweise jeweils im Bereich von 1:18 bis 1:25 gewählt werden kann. Dies ist insbesondere im Hinblick auf eine kompakte Bauweise von Vorteil.

Jedoch ist es auch möglich, für jede Getriebestufe 221, 222 ein eigenes Hohlrad vorzusehen.

Ferner kann die zweite Getriebeeinrichtung 22 zwei untereinander verschiedene hoch übersetzende koaxiale Getriebe als Getriebestufen aufweisen. So kann beispielsweise eines der hoch übersetzenden koaxialen Getriebe als Zykloidgetriebe ausgeführt sein, während das andere ein Exzentergetriebe ist.

Es ist auch möglich, die zweite Getriebeeinrichtung 22 einstufig, d.h. mit lediglich einer Getriebestufe auszubilden.

In sämtlichen Fällen ist jedoch mindestens ein hoch übersetzendes koaxiales Getriebe, sei es ein Exzentergetriebe mit Evolventenverzahnung oder ein Zykloidgetriebe, vorhanden. Als "hoch übersetzende koaxiale Getriebe" werden vorliegend Getriebe mit hohem einstufigem Übersetzungsverhältnis im Bereich von 1:15 bis 1:400 und koaxialem Ein- und Ausgangsglied verstanden.

Ferner ist es möglich, eine Getriebestufe 221 in Form eines hoch übersetzenden koaxialen Getriebes mit einer Getriebestufe zu kombinieren, welche ein geringeres Übersetzungsverhältnis aufweist. Jedoch muss in diesem Fall zur Bereitstellung hinreichender Drehmomente dann ein hoch übersetzendes koaxiales Getriebe mit gegenüber dem ersten Ausführungsbeispiel deutlich erhöhtem Übersetzungsverhältnis zum Einsatz kommen.

Wollte man entsprechende Gesamtübersetzungen mit Planetengetrieben erzielen, wäre eine größere Anzahl von Getriebestufen nötig. Zudem würde sich die Gesamtlänge in Axialrichtung deutlich erhöhen. Harmonic-Drive-Getriebe, d.h. Wellgetriebe, würden in diesem Übersetzungsbereich hingegen zu sehr großen radialen Ausdehnungen führen, was ebenfalls unerwünscht ist.

Die Verlagerung der Lenkungsunterstützung auf die Ausgangswelle 19 ermöglicht gegenüber DE 20 2004 021 588 U1 weiterhin eine Vereinfachung der ersten Getriebeeinrichtung 21 zwischen der Eingangswelle 18 und der Ausgangswelle 19, da vorliegend keine hydraulischen Einrichtungen mehr in und am Lenkgetriebe benötigt werden. Hierdurch reduzieren sich die Abmessungen in Richtung der Drehachse A.

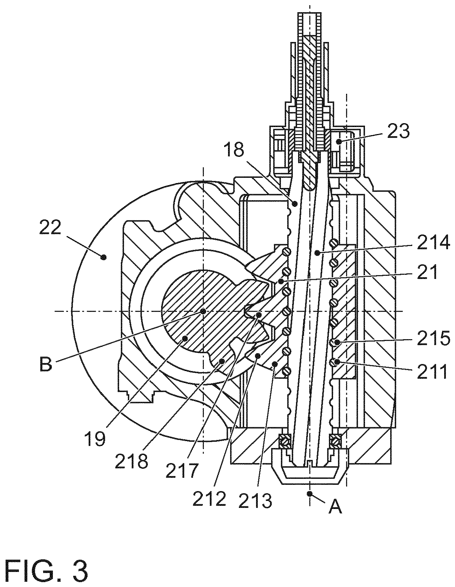

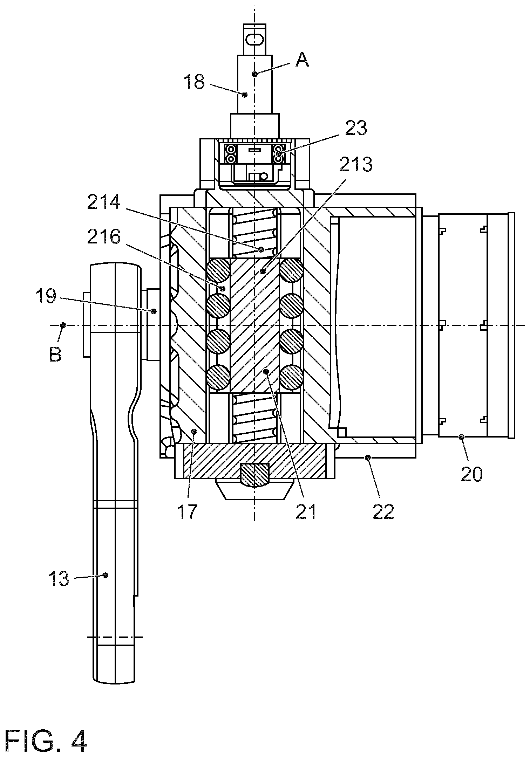

Bei dem ersten Ausführungsbeispiel weist die erste Getriebeeinrichtung 21, welche in den Figuren 3 und 4 gut zu erkennen ist, zwei Getriebestufen 211 und 212 auf. Die erste Getriebestufe 211 dient der Übersetzung einer Drehbewegung der Eingangswelle 18 um deren Drehachse A in eine Translationsbewegung eines Zwischenglieds 213. Die zweite Getriebestufe 212 dient der Übersetzung der Translationsbewegung des Zwischenglieds 213 in eine Drehbewegung der Ausgangswelle 19 um deren Drehachse A. Das Übersetzungsverhältnis der ersten Getriebeeinrichtung 21 ins Langsame liegt im Bereich von 1:10 bis 1:40, wodurch mit bei einem eingangsseitigen Verdrehbereich von 900° am Lenkrad 12 hinreichend große Schwenkwinkel am Lenkstockhebel 13 zum Betätigen des Spurstangengestänges 16 erzielt werden.

Die erste Getriebestufe 211 wird vorliegend durch einen Kugelgewindetrieb gebildet. Dazu weist die Eingangswelle 18 einen Spindelabschnitt 214 auf, welcher über Kugeln 215 mit einem Innengewinde des Zwischenglieds 213 in Eingriff steht. Das Zwischenglied 213 ist an dem Lenkgetriebegehäuse 17 linear geführt. Hierzu ist zwischen dem Zwischenglied 213 und dem Lenkgetriebegehäuse 17 eine geeignete Führungseinrichtung 216 vorgesehen. Beispielsweise können hierzu am Außenumfang des Zwischenglieds 213 sowie am Innenumfang des Lenkgetriebegehäuses 17 Längsnuten ausgebildet sein, welche jeweils mit gemeinsamen Rollen oder Kugeln in Eingriff stehen. Wird die Eingangswelle 18 um die Drehachse A gedreht, verschiebt sich das Zwischenglied 213 in Längsrichtung derselben.

Das Zwischenglied 213 weist an seinem Außenumfang für die zweite Getriebestufe 212 weiterhin eine Verzahnung 217 auf, welche mit einer an der Abtriebswelle 19 ausgebildeten oder befestigten Verzahnungsstruktur 218 in Eingriff steht. Hierdurch wird die Translationsbewegung des Zwischenglieds 213 wieder in eine Drehbewegung gewandelt, durch welche letztlich das Handmoment mit dem Übersetzungsverhältnis der ersten Getriebeeinrichtung 21 an der Abtriebswelle 19 anliegt.

Die zweite Getriebestufe 212 kann mit einem variablen Übersetzungsverhältnis ausgeführt werden, um dem Fahrer das Lenken eines Fahrzeugs zu erleichtern. Die Verzahnungsgeometrie kann dazu dahingehend modifiziert werden, dass in einem Bereich, der näher zur Mittellage der Lenkung, welche bei Geradeausfahrt eingenommen wird, gelegen ist, Lenkbewegungen am Lenkrad 12 weniger große Radeinschläge bewirken als Lenkbewegungen in einem von der Mittellage weiter entfernten Bereich.

Der Elektromotor 20 ist in Abhängigkeit eines fahrerseitigen Lenkbefehls sowie gegebenenfalls weiterer Fahrzeugparameter angesteuert. Insbesondere kann die Ansteuerung des Elektromotors 20 in Abhängigkeit des vom Fahrer am Lenkrad 12 aufgebrachten Handmoments erfolgen. Eine entsprechende Steuereinrichtung 26 kann bauraumgerecht um die Ausgangswelle 19 angeordnet werden. Das Handmoment kann mittels einer Drehmomentmesseinrichtung 23 erfasst werden, die eingangsseitig an der Eingangswelle 18 angeordnet ist.

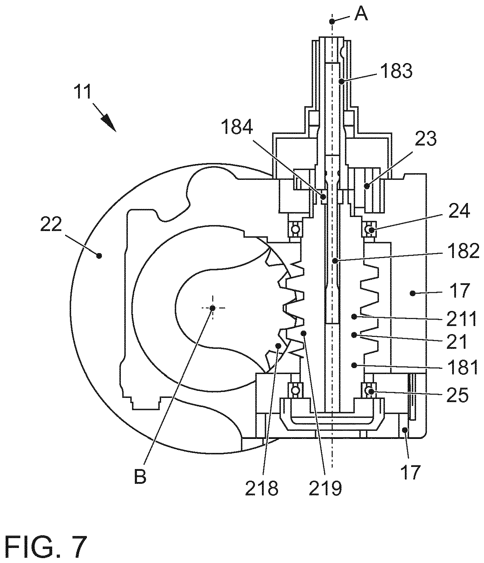

Bei dem ersten Ausführungsbeispiel ist die erste Getriebeeinrichtung 21 zweistufig ausgebildet. Es ist jedoch auch möglich, diese einstufig auszubilden, wie dies in Figur 7 im Rahmen eines zweiten Ausführungsbeispiels dargestellt ist. In diesem Fall weist die erste Getriebeeinrichtung genau eine Getriebestufe 21 auf, welche eine Drehbewegung der Eingangswelle um deren Drehachse A in eine Drehbewegung der Ausgangswelle um deren Drehachse B übersetzt. Dies kann beispielsweise, wie in Figur 7 beispielhaft dargestellt, durch einen Schneckentrieb erfolgen. Hierzu ist an dem Zwischenglied 213 ein Spindelabschnitt 219 ausgebildet, der mit der an der Abtriebswelle 19 ausgebildeten oder befestigten Verzahnungsstruktur 218 in Eingriff steht. Die erste Getriebeeinrichtung 21 kommt somit ohne ein translatorisch bewegbares Zwischenglied 213 aus, wodurch sich die Abmessungen in Längsrichtung der Drehachse A weiter verringern.

Anstelle eines Schneckentriebs kann auch ein einstufiges Kegelradgetriebe oder Hypoidgetriebe vorgesehen sein.

Die Eingangswelle 18 kann weiterhin mit einem Hohlwellenabschnitt 181 ausgebildet sein, in welchen sich ein Drehstab 182 erstreckt. Der Drehstab 182 ist an einem Ende mit diesem Hohlwellenabschnitt 181 drehfest verbunden, während das andere Ende des Drehstabs 182 mit einem eingangsseitigen Wellenabschnitt 183 verbunden ist, über den das Handmoment in das Lenkgetriebe 11 eingeleitet wird. Der Spindelabschnitt 219 der Getriebestufe ist vorzugsweise an dem Hohlwellenabschnitt 181 ausgebildet oder angebracht, welcher axial beidseits des Spindelabschnitts 219 mittels Wälzlagern 24 und 25 im Lenkgetriebegehäuse 17 drehbar gelagert ist. Die Drehmomentmesseinrichtung 23 umschließt hierbei sowohl einen Teil des Hohlwellenabschnitts 181 als auch einen Teil des eingangsseitigen Wellenabschnitts 183. Ein Überlastschutz 184 kann hierbei an dem Hohlwellenabschnitt 181 vorgesehen werden.

Die vorstehend erläuterten Komponenten, insbesondere jedoch zumindest die Eingangswelle 18, die Ausgangswelle 19, die erste Getriebeeinrichtung 21 und zumindest das hoch übersetzende koaxiale Getriebe der zweiten Getriebeeinrichtung 22 sind in dem Lenkgetriebegehäuse aufgenommen. Zudem kann auch der Elektromotor 20 in dem Lenkgetriebegehäuse 17 aufgenommen sein. Es ist jedoch auch möglich, diesen außenseitig am Lenkgetriebegehäuse 17 anzuflanschen. Weiterhin können auch Teile des Elektromotors 20, wie beispielsweise dessen Stator, durch Abschnitte des Lenkgetriebegehäuses 17 gebildet werden.

Weiterhin kann der Elektromotor 20 einen Stator mit mindestens zwei elektrisch getrennten Wicklungsgruppen aufweisen, welche jeweils durch eine eigene elektronische Steuereinrichtung angesteuert sind, um das vom Elektromotor 20 abgegebene Drehmoment zu erhöhen.

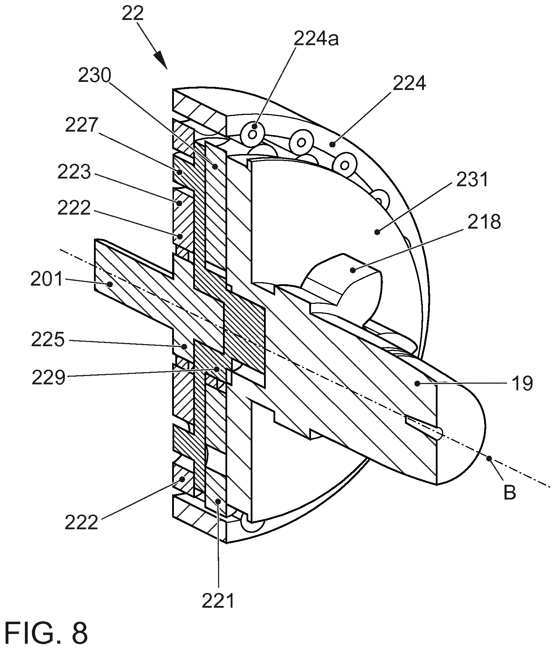

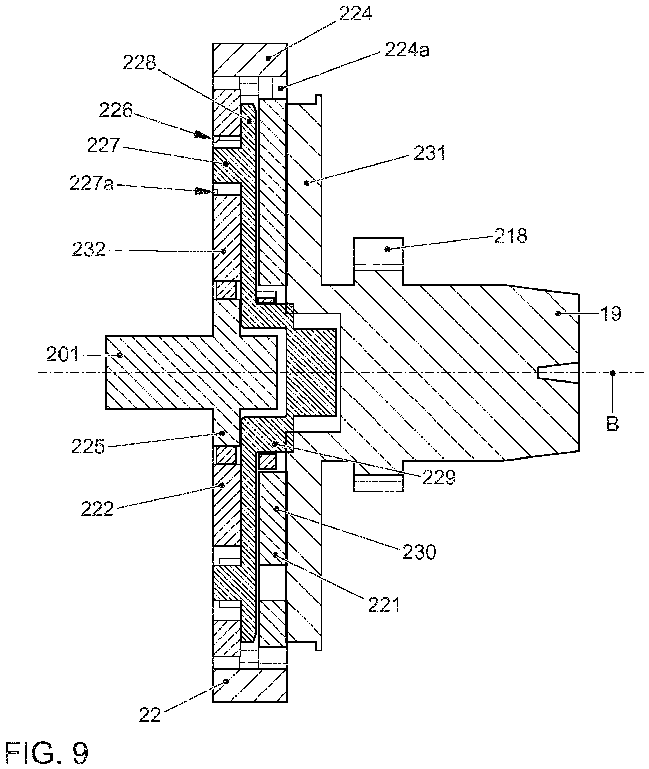

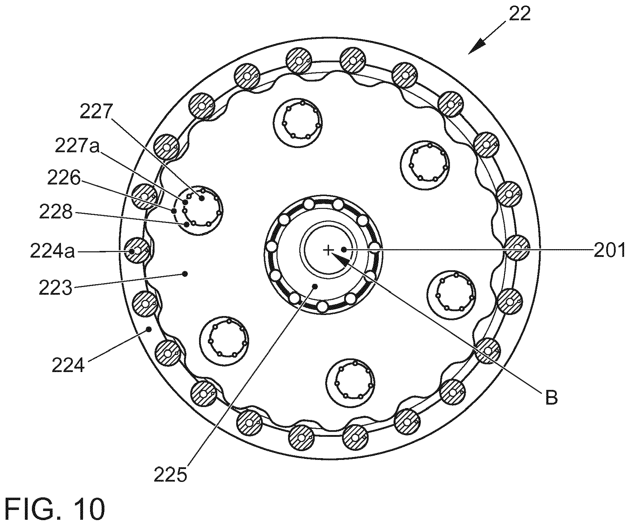

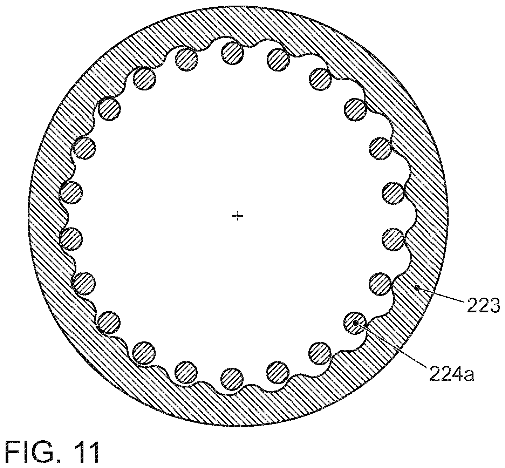

Anhand der Figuren 8 bis 11 soll nunmehr ein drittes Ausführungsbeispiel eines Lenkgetriebes 11 erläutert werden. Dieses ist im Wesentlichen entsprechend dem ersten oder zweiten Ausführungsbeispiel ausgebildet und unterscheidet sich von diesen lediglich durch die Verwendung eines anderen hoch übersetzenden koaxialen Getriebes in der zweiten Getriebeeinrichtung 22. Anstelle der vorstehend erläuterten Exzentergetriebe kann jeweils ein Zykloidgetriebe zum Einsatz kommen, wobei in Figur 8 zwei aufeinander folgende Getriebestufen 221 und 222 jeweils als einstufige Zykloidgetriebe dargestellt sind.

Die motorseitige zweite Getriebestufe 222 weist ein Innenrad 223 auf, das an seinem Außenumfang eine Wellenkontur in Form einer Epizykloiden aufweist. Diese Wellenkontur steht mit an einem Hohlrad 224 vorgesehenen Bogensegmenten, hier beispielhaft Rollen 224a, partiell in Eingriff, wobei das Innenrad 223 zwischen diesen Bogensegmenten im Hohlrad 224 umlaufen kann. Das Innenrad wird durch 223 durch einen zur Drehachse der Abtriebswelle 201 des Elektromotors 20 exzentrischen Wellenabsatz 225 angetrieben, so dass das Innenrad 223 in dem Hohlrad 224 umläuft.

Das Innenrad 223 weist weiterhin mehrere axiale Öffnungen 226 auf, welches in Umfangsrichtung gleichmäßig verteilt angeordnet sind. In die Öffnungen 226 greifen Mitnehmer 227 eines Ausgangsglieds 228 der zweiten Getriebestufe 222 ein. Die Mitnehmer 227 weisen einen kleineren Durchmesser auf, als die Öffnungen 226.

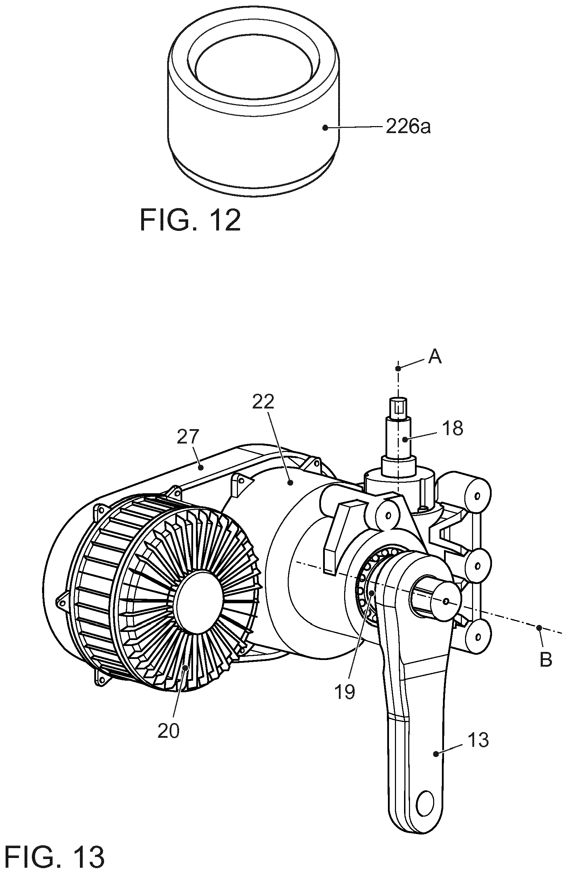

Zur Verminderung der Reibung können auf den Mitnehmern 227 Wälzlager 227a angeordnet sein, über welche die Mitnehmer 227 mit den Öffnungen 226 in Eingriff stehen. Alternativ zu den Wälzlagern 227a auf den Mitnehmern 227 oder in Ergänzung hierzu können zylindrische Bohrbuchsen 226a wie in Fig. 12 dargestellt, in die Öffnungen 226 eingepresst sein.

Wird der Elektromotor 20 in Betrieb gesetzt, um dessen Abtriebswelle 201 zu drehen, nimmt diese das Innenrad 223 in Drehrichtung mit. Das Innenrad 223 wälzt dabei an den Bogensegmenten des Hohlrads 224 ab. Die Öffnungen 226 nehmen hierbei die Mitnehmer 227 in Umfangsrichtung mit, wodurch das Ausgangsglied 228 um die Drehachse B dreht.

Die zweite Getriebestufe 222 überträgt das Antriebsmoment des Elektromotors 20 auf die hierzu koaxial angeordnete erste Getriebestufe 221. Diese ist bei dem dritten Ausführungsbeispiel ebenfalls als Zykloidgetriebe ausgebildet, das axial unmittelbar an die zweite Getriebestufe 222 anschließt. Das Ausgangsglied 228 der zweiten Getriebestufe 222 weist hierzu einen exzentrischen Wellenabsatz 229 zum Antrieb des zweiten Innenrads 230 auf. Dieses kämmt wiederum mit den Bogensegmenten des Hohlrads 224, um über Öffnungen Mitnehmer am Ausgangsglied 231 der ersten Getriebestufe 221 um die Drehachse B zu drehen und hierdurch letztlich die Ausgangswelle 19 anzutreiben. Das Ausgangsglied der ersten Getriebestufe 221 kann als scheibenförmiger Träger ausgebildet sein, von dem die Mitnehmer axial in Richtung der Öffnungen des Innenrads 230 der ersten Getriebestufe 221 abstehen. Das Ausgangsglied 231 ist integral mit der Ausgangswelle 19 ausgebildet, an der auch die Verzahnung 218 der ersten Getriebeeinrichtung 21 ausgebildet ist. Jedoch kann das Ausgangsglied 231 auch anderweitig mit der Ausgangswelle 19 verbunden sein.

Alternativ können die Bogensegmente, beispielsweise Rollen oder Zylinderstifte, auch an einer Innenkontur in Form einer Hypoidzykloide abrollen.

Zudem können auch hier Bohrbuchen 226a anstelle oder in Ergänzung der Wälzlager 227a vorgesehen werden.

Eine solche zweistufige zweite Getriebeeinrichtung 22 kann wie die oben erläuterten Exzentergetriebe mit Evolventenverzahnung mit einem Übersetzungsverhältnis im Bereich von 1:18 bis 1:25 je Getriebestufe zum Einsatz kommen. Zudem kann eine solche zweite Getriebeeinrichtung 22 wie im Zusammenhang mit dem ersten Ausführungsbeispiel beschrieben modifiziert werden.

Figur 4 zeigt ein viertes Ausführungsbeispiel, bei dem der Elektromotor 20 achsparallel zur Drehachse B der Ausgangswelle 19 angeordnet ist. Das Antriebsmoment des Elektromotors 20 wird hierbei über einen Riementrieb 27 an ein Eingangsglied eines hoch übersetzenden koaxialen Getriebes, welches koaxial zu der Ausgangswelle 19 angeordnet und mit dieser antriebsmäßig gekoppelt ist, übertragen.

Der Riementrieb 27 kann hierbei die zweite Getriebestufe 222 der zweiten Getriebeeinrichtung 22 ersetzen, so dass an der Ausgangswelle 19 lediglich eine Getriebestufe in Form eines einstufigen hoch übersetzende koaxialen Getriebes verbleibt. Durch den Versatz des Elektromotors 20 verkürzt sich die Länge des Lenkgetriebes 11 in Richtung der Drehachse B. Mittels eines Riementriebs 27 kann der Elektromotor 20 je nach Bedarf und die Drehachse B herum positioniert werden, wodurch eine einfache Anpassung an unterschiedliche räumliche Gegebenheiten möglich wird.

Anstelle eines Riementriebs 27 kann der Elektromotor 20 jedoch beispielsweise auch über ein Kegelradgetriebe oder Hypoidgetriebe an ein Eingangsglied eines einstufigen hoch übersetzenden koaxialen Getriebes angeschlossen werden.

Das einstufige hoch übersetzende koaxiale Getriebe an der Ausgangswelle kann beispielsweise ein Exzentergetriebe oder ein Zykloidgetriebe sein, beispielsweise mit einer Übersetzung von i=97, während die andersartige vorgeschaltete zweite Getriebestufe ein deutlich kleineres Übersetzungsverhältnis von i=5. aufweist. Dadurch kann eine Gesamtübersetzung von i=485 ins Langsame erreicht werden, um ein Abtriebsmoment von beispielsweise etwa 8100 Nm zu erreichen.

Weiterhin ist es möglich, der ersten Getriebestufe 221 auf der Abtriebswelle 19 eine koaxiale Getriebestufe wie beispielsweise ein Planetengetriebe vorzuschalten. Mit einer vorgeschalteten Getriebestufe kann das einstufige hoch übersetzende koaxiale Getriebe mit einer höheren Übersetzung ausgeführt werden. Dies bedeutet, dass beispielsweise bei einem Zykloidgetriebe wesentlich mehr Bogensegmente, d.h. Rollen, Zylinderstifte, Nadeln oder dergleichen Kräfte aufnehmen, woraus eine Erhöhung der Lebensdauer resultiert.

Generell kann somit im Sinne des vierten Ausführungsbeispiels die zweite Getriebeeinrichtung 22 zwischen dem Elektromotor 20 und dem hoch übersetzenden koaxialen Getriebe eine zusätzliche Getriebestufe 27 aufweisen, wobei das hoch übersetzende koaxiale Getriebe 2221 ein Übersetzungsverhältnis ins Langsame größer als 1:80 aufweist und die diesem vorgeschaltete zusätzliche Getriebestufe 27 ein Übersetzungsverhältnis ins Langsame kleiner als 1:10 aufweist.

Es hat sich gezeigt, dass sich mit einer solchen Anordnung eine besonders kompakte Nutzfahrzeuglenkung darstellen lässt, welche die Bereitstellung großer Drehmomente durch einen elektromotorischen Antrieb bei einem begrenzten Bauraum ermöglicht.

Die Erfindung ermöglicht eine Nutzfahrzeuglenkung, bei welcher die Hilfskraftunterstützung rein elektrisch mit einem einzigen Elektromotor 20 erfolgen kann. Dabei können mit einer Bordnetzspannung von 24V am Lenkstockhebel 13 Drehmomente in der Größenordnung von etwa 8000 Nm bereitgestellt werden, wodurch Nutzfahrzeuge mit Vorderachslasten von mehr als 2,5 t lenkbar sind.

Die Erfindung wurde vorstehend anhand verschiedener Ausführungsbeispiele und weiterer Abwandlungen näher erläutert. Insbesondere können technische Einzelmerkmale, welche oben im Kontext weiter Einzelmerkmale erläutert wurden, unabhängig von diesen sowie in Kombination mit weiteren Einzelmerkmalen verwirklicht werden, auch wenn dies nicht ausdrücklich beschrieben ist, solange dies technisch möglich ist. Die Erfindung ist daher ausdrücklich nicht auf die beschriebenen Ausführungsbeispiele beschränkt, sondern umfasst alle durch die Patentansprüche definierten Ausgestaltungen.

### Bezugszeichenliste

- 10: Lenkung
- 11: Lenkgetriebe
- 12: Lenkrad
- 13: Lenkstockhebel
- 14: Lenksäule
- 15: Spurstangengestänge
- 16: Fahrzeugrad
- 17: Lenkgetriebegehäuse
- 18: Eingangswelle
- 181: Hohlwellenabschnitt
- 182: Drehstab
- 183: eingangsseitiger Wellenabschnitt
- 184: Überlastschutz
- 19: Ausgangswelle
- 20: Elektromotor
- 201: Abtriebswelle
- 21: erste Getriebeeinrichtung
- 211: erste Getriebestufe der ersten Getriebeeinrichtung
- 212: zweite Getriebestufe der ersten Getriebeeinrichtung
- 213: Zwischenglied
- 214: Spindelabschnitt
- 216: Linearführungseinrichtung
- 217: Verzahnung
- 218: Verzahnungsstruktur
- 219: Spindelabschnitt
- 22: zweite Getriebeeinrichtung
- 221: erste Getriebestufe der zweiten Getriebeeinrichtung
- 222: zweite Getriebestufe der zweiten Getriebeeinrichtung
- 223: Innenrad
- 224: Hohlrad
- 224a: Rolle
- 225: exzentrischer Wellenabschnitt
- 226: Öffnung
- 226a: zylindrische Bohrbuchse
- 227: Mitnehmer
- 227a: Wälzlager
- 228: Ausgangslied der zweiten Getriebestufe
- 229: exzentrischen Wellenabsatz
- 230: Innenrad
- 231: Ausgangsglied der ersten Getriebestufe
- 24: Lager
- 25: Lager
- 26: Drehmomentmesseinrichtung
- A: Drehachse der Eingangswelle
- B: Drehachse der Ausgangswelle

## Patentansprüche

1. Nutzfahrzeuglenkung, umfassend ein Lenkgetriebe (11) zur Übertragung eines an einem Lenkrad (12) aufgebrachten Handmoments an einen Lenkstockhebel (13), das einen Elektromotor (20) zur Bereitstellung eines Hilfsmoments zur Lenkunterstützung aufweist, wobei die Lenkunterstützung über den gesamten Betriebsbereich der Lenkung ausschließlich elektrisch bereitgestellt wird, wobei das Lenkgetriebe (11) weiterhin aufweist:
• eine Eingangswelle (18) und eine Ausgangswelle (19), deren Drehachsen (A, B) zueinander windschief sind,
• eine erste Getriebeeinrichtung (21), welche die Eingangswelle (18) mit der Ausgangswelle (19) koppelt, und
• eine zweite Getriebeeinrichtung (22), an welche eingangsseitig der Elektromotor (20) angeschlossen ist und welche mindestens eine ins langsame übersetzende Getriebestufe (221) in Form eines hoch übersetzenden koaxialen Getriebes aufweist,
**dadurch gekennzeichnet, dass** die zweite Getriebeeinrichtung (22) ausgangsseitig mit der Ausgangswelle (19) gekoppelt ist und deren ins Langsame übersetzende Getriebestufe (221) in Form des hoch übersetzenden koaxialen Getriebes koaxial zu der Ausgangswelle (19) angeordnet ist.

2. Nutzfahrzeuglenkung nach Anspruch 1, **dadurch gekennzeichnet, dass** die zur Ausgangswelle (19) koaxiale Getriebestufe (221) ein Exzentergetriebe mit Verzahnung, ein Exzentergetriebe mit Evolventenverzahnung oder ein Zykloidgetriebe ist.

3. Nutzfahrzeuglenkung nach Anspruch 1 oder 2, **dadurch gekennzeichnet, dass** die zweite Getriebeeinrichtung (22) zwei Getriebestufen (221, 222) aufweist, welche jeweils als ins Langsame übersetzende Getriebestufen in Form eines hoch übersetzenden koaxialen Getriebes ausgebildet sind.

4. Nutzfahrzeuglenkung nach Anspruch 3, **dadurch gekennzeichnet, dass** beide Getriebestufen (221, 222) der zweiten Getriebeeinrichtung (22) entweder als Exzentergetriebe oder als Zykloidgetriebe ausgebildet sind, wobei für die Getriebestufen (221, 222) ein gemeinsames Hohlrad (224) vorgesehen ist, mit dem die Innenscheiben (223, 230) beider Getriebestufen (221, 222) in Eingriff stehen.

5. Nutzfahrzeuglenkung nach Anspruch 3 oder 4, **dadurch gekennzeichnet, dass** beide Getriebestufen (221, 222) der zweiten Getriebeeinrichtung (22) ein gleiches oder annähernd gleiches Übersetzungsverhältnis jeweils im Bereich von 1:18 bis 1:25 aufweisen.

6. Nutzfahrzeuglenkung nach einem der Ansprüche 1 bis 5, **dadurch gekennzeichnet, dass** der Elektromotor (20) koaxial zur Ausgangswelle (19) angeordnet ist.

7. Nutzfahrzeuglenkung nach Anspruch 1 oder 2, **dadurch gekennzeichnet, dass** die zweite Getriebeeinrichtung (22) zwischen dem Elektromotor (20) und dem hoch übersetzenden koaxialen Getriebe (221) eine Getriebestufe (27) in Form eines ins Langsame übersetzenden Riementriebs, Planetengetriebes, Kegelradgetriebes oder Hypoidgetriebes aufweist.

8. Nutzfahrzeuglenkung nach einem der Ansprüche 1, 2 oder 8, **dadurch gekennzeichnet, dass** die zweite Getriebeeinrichtung (22) eine zwischen dem Elektromotor (20) und dem hoch übersetzenden koaxialen Getriebe (221) eine zusätzliche Getriebestufe (27) aufweist, wobei das hoch übersetzende koaxiale Getriebe (221) ein Übersetzungsverhältnis ins Langsame größer als 1:60 aufweist und die diesem vorgeschaltete zusätzliche Getriebestufe (27) ein Übersetzungsverhältnis ins Langsame kleiner als 1:8 aufweist.

9. Nutzfahrzeuglenkung nach einem der Ansprüche 1 bis 8, **dadurch gekennzeichnet, dass** an der Ausgangswelle (19) eine Verzahnungsstruktur (218) als Bestandteil der ersten Getriebeeinrichtung (21) befestigt oder ausgebildet ist.

10. Nutzfahrzeuglenkung nach einem der Ansprüche 1 bis 9, **dadurch gekennzeichnet, dass** die erste Getriebeeinrichtung (21) zwei Getriebestufen (211, 212) aufweist, nämlich eine erste Getriebestufe (211) zur Übersetzung einer Drehbewegung der Eingangswelle (18) um deren Drehachse (A) in eine Translationsbewegung eines Zwischenglieds (213), sowie eine zweite Getriebestufe (212) zur Übersetzung der Translationsbewegung des Zwischenglieds (213) in eine Drehbewegung der Ausgangswelle (19) um deren Drehachse (B), wobei das Übersetzungsverhältnis der ersten Getriebeeinrichtung (21) ins Langsame im Bereich von 1:10 bis 1:40 liegt.

11. Nutzfahrzeuglenkung nach einem der Ansprüche 1 bis 9, **dadurch gekennzeichnet, dass** die erste Getriebeeinrichtung (21) genau eine Getriebestufe (211) aufweist, welche eine Drehbewegung der Eingangswelle (18) um deren Drehachse (A) in eine Drehbewegung der Ausgangswelle (19) um deren Drehachse (B) übersetzt.

12. Nutzfahrzeuglenkung nach Anspruch 11, **dadurch gekennzeichnet, dass** die einzige Getriebestufe (211) der ersten Getriebeeinrichtung (21) ein Schneckentrieb, ein Kegelradgetriebe oder ein Hypoidgetriebe ist.

13. Nutzfahrzeuglenkung nach einem der Ansprüche 1 bis 12, **dadurch gekennzeichnet, dass** an der Eingangswelle (18) eingangsseitig eine Drehmomentmesseinrichtung (23) angeordnet ist.

14. Nutzfahrzeuglenkung nach einem der Ansprüche 1 bis 13, **dadurch gekennzeichnet, dass** ein Lenkgetriebegehäuse (17) die Eingangswelle (18), die Ausgangswelle (19), die erste Getriebeeinrichtung (21) und zumindest das hoch übersetzende koaxiale Getriebe (221) der zweiten Getriebeeinrichtung (22) aufnimmt.

15. Nutzfahrzeuglenkung nach einem der Ansprüche 1 bis 14, **dadurch gekennzeichnet, dass** der Elektromotor (20) in dem Lenkgetriebegehäuse (17) aufgenommen ist

16. Nutzfahrzeuglenkung nach einem der Ansprüche 1 bis 15, **dadurch gekennzeichnet, dass** Teile des Elektromotors (20) durch Abschnitte des Lenkgetriebegehäuses (17) gebildet werden.

17. Nutzfahrzeuglenkung nach einem der Ansprüche 1 bis 16, **dadurch gekennzeichnet, dass** der Elektromotor (20) einen Stator mit mindestens zwei elektrischen getrennten Wicklungsgruppen aufweist, welche jeweils durch eine eigene elektronische Steuereinrichtung (26) angesteuert sind.

18. Nutzfahrzeuglenkung nach einem der Ansprüche 1 bis 17, **dadurch gekennzeichnet, dass** die Lenkunterstützung über den gesamten Betriebsbereich allein durch den einzigen Elektromotor (20) bereitgestellt wird.

19. Nutzfahrzeuglenkung nach einem der Ansprüche 1 bis 18, **dadurch gekennzeichnet, dass** die Lenkunterstützung über den gesamten Betriebsbereich ausschließlich elektrisch bereitgestellt wird.

20. Nutzfahrzeuglenkung nach einem der Ansprüche 1 bis 19, **dadurch gekennzeichnet, dass** die Getriebestufe, über welche die erste Getriebeeinrichtung (21) an der Ausgangswelle (19) angreift, ein variables Übersetzungsverhältnis derart aufweist, dass in einem näher zur Mittellage der Lenkung gelegenen Bereich Lenkbewegungen am Lenkrad (12) weniger große Radeinschläge bewirken als Lenkbewegungen in einem von der Mittellage weiter entfernten Bereich.

## Claims

1. A utility vehicle steering system, comprising a steering gear (11) for transmitting a manual torque, which is applied to a steering wheel (12), to a steering column lever (13), which has an electric motor (20) for providing auxiliary torque for steering assistance, wherein the steering assistance is provided exclusively electrically over the entire operating range of the steering system, wherein the steering gear (11) furthermore has:
- an input shaft (18) and an output shaft (19), the axes of rotation (A, B) of which are skewed with respect to each other,
- a first gear device (21), which couples the input shaft (18) to the output shaft (19), and
- a second gear device (22), to which the electric motor (20) is connected on the input side and which has at least one gearing-down gear stage (221) in the form of a coaxial gear with a high transmission ratio,
**characterized in that** the second gear device (22) is coupled with the output shaft (19) on the output side and the gearing-down gear stage (221) of which, in the form of the coaxial gear with high transmission ratio, is arranged coaxially with respect to the output shaft (19).

2. The utility vehicle steering system according to Claim 1, **characterized in that** the gear stage (221) coaxial to the output shaft (19) is an eccentric gear with toothing, an eccentric gear with involute toothing or a cycloidal gear.

3. The utility vehicle steering system according to Claim 1 or 2, **characterized in that** the second gear device (22) has two gear stages (221, 222), which in each case are designed as gearing-down gear stages in the form of a coaxial gear with a high transmission ratio.

4. The utility vehicle steering system according to Claim 3, **characterized in that** both gear stages (221, 222) of the second gear device (22) are designed either as eccentric gears or as cycloidal gears, wherein a common ring gear (224) is provided for the gear stages (221, 222), with which the inner discs (223, 230) of both gear stages (221, 222) are engaged.

5. The utility vehicle steering system according to Claim 3 or 4, **characterized in that** both gear stages (221, 222) of the second gear device (22) have an identical or approximately identical transmission ratio in each case in the range of 1:18 to 1:25.

6. The utility vehicle steering system according to any one of Claims 1 to 5, **characterized in that** the electric motor (20) is arranged coaxially to the output shaft (19).

7. The utility vehicle steering system according to Claim 1 or 2, **characterized in that** the second gear device (22) has a gear stage (27) between the electric motor (20) and the coaxial gear with a high transmission ratio (221) in the form of a gearing-down belt drive, planetary gear, bevel gear or hypoid gear.

8. The utility vehicle steering system according to any one of Claims 1, 2 or 8, **characterized in that** the second gear device (22) has an additional gear stage (27) between the electric motor (20) and the coaxial gear with a high transmission ratio (221), wherein the coaxial gear with a high transmission ratio (221) has a gearing-down transmission ratio greater than 1:60 and the additional gear stage (27) upstream thereof has a gearing-down transmission ratio less than 1:8.

9. The utility vehicle steering system according to any one of Claims 1 to 8, **characterized in that** a toothing structure (218) is fastened to the output shaft (19) or designed as a component of the gear device (21).

10. The utility vehicle steering system according to any one of Claims 1 to 9, **characterized in that** the first gear device (21) has two gear stages (211, 212), namely a first gear stage (211) for translating a rotational movement of the input shaft (18) about its rotational axis (A) into a translational movement of an intermediate member (213) and second gear stage (212) for translating the translational movement of the intermediate member (213) into a rotational movement of the output shaft (19) about its rotational axis (B), wherein the gearing-down transmission ratio of the first gear device (21) is in the range of 1:10 to 1:40.

11. The utility vehicle steering system according to any one of Claims 1 to 9, **characterized in that** the first gear device (21) has exactly one gear stage (211), which translates a rotational movement of the input shaft (18) about its rotational axis (A) into a rotational movement of the output shaft (19) about its rotational axis (B).

12. The utility vehicle steering system according to Claim 11, **characterized in that** the single gear stage (211) of the first gear device (21) is a worm drive, a bevel gear or a hypoid gear.

13. The utility vehicle steering system according to any one of Claims 1 to 12, **characterized in that** a torque-measuring device (23) is arranged on the input shaft (18) on the input side.

14. The utility vehicle steering system according to any one of Claims 1 to 13, **characterized in that** the steering gear housing (17) accommodates the input shaft (18), the output shaft (19), the first gear device (21) and at least the coaxial gear with high transmission ratio (221) of the second gear device (22).

15. The utility vehicle steering system according to any one of Claims 1 to 14, **characterized in that** the electric motor (20) is accommodated in the steering gear housing (17).

16. The utility vehicle steering system according to any one of Claims 1 to 15, **characterized in that** parts of the electric motor (20) are formed by sections of the steering gear housing (17).

17. The utility vehicle steering system according to any one of Claims 1 to 16, **characterized in that** the electric motor (20) has a stator with at least two electrically separated winding groups, which in each case are controlled by their own electronic control device (26).

18. The utility vehicle steering system according to any one of Claims 1 to 17, **characterized in that** the steering assistance is provided over the entire operating range solely by the single electric motor (20).

19. The utility vehicle steering system according to any one of Claims 1 to 18, **characterized in that** the steering assistance is provided exclusively electrically over the entire operating range.

20. The utility vehicle steering system according to any one of the Claims 1 to 19, **characterized in that** the gear stage, by means of which the first gear device (21) engages with the output shaft (19), has a variable transmission ratio in such a manner that in one area located closer to the central position of the steering system steering movements on the steering wheel (12) cause less large steering angles than steering movements in an area further away from the central position.

## Revendications

1. Direction de véhicule utilitaire comprenant un mécanisme de direction (11) pour la transmission d'un couple manuel, appliqué à un volant (12), à un levier de direction (13), qui comprend un moteur électrique (20) pour la production d'un couple auxiliaire pour une assistance de direction, l'assistance de direction étant générée de manière exclusivement électrique sur tout le domaine de fonctionnement de la direction, le mécanisme de direction (11) comprenant en outre :
• un arbre d'entrée (18) et un arbre de sortie (19) dont les axes de rotation (A, B) sont gauchis entre eux,
• un premier dispositif à engrenage (21) qui couple l'arbre d'entrée (18) avec l'arbre de sortie (19) et
• un deuxième dispositif à engrenage (22), auquel, côté entrée, être raccordé le moteur électrique (20) et qui comprend au moins un étage d'engrenage réducteur (221) sous la forme d'un engrenage coaxial à démultiplication élevée,
**caractérisée en ce que** le deuxième dispositif à engrenage (22) est couplé côté sortie avec l'arbre de sortie (19) et son étage d'engrenage réducteur (221) est disposé coaxialement par rapport à l'arbre de sortie (19) sous la forme de l'engrenage coaxial à démultiplication élevée.

2. Direction de véhicule utilitaire selon la revendication 1, **caractérisée en ce que** l'étage d'engrenage (221) coaxial par rapport à l'arbre de sortie (19) est un engrenage excentrique avec une denture, un engrenage excentrique avec une denture à développante ou un engrenage cycloïde.

3. Direction de véhicule utilitaire selon la revendication 1 ou 2, **caractérisée en ce que** le deuxième dispositif à engrenage (22) comprend deux étages d'engrenages (221, 222) qui sont conçus chacun comme des étages d'engrenages réducteurs sous la forme d'un engrenage coaxial à démultiplication élevée.

4. Direction de véhicule utilitaire selon la revendication 3, **caractérisée en ce que** les deux étages d'engrenages (221, 222) du deuxième dispositif d'engrenage (22) sont conçus soit comme un engrenage excentrique soit comme un engrenage cycloïde, moyennant quoi, pour les étages d'engrenages (221, 222), une couronne commune (224) est prévue, avec laquelle les disques internes (223, 230) des deux étages d'engrenages (221, 222) s'emboîtent.

5. Direction de véhicule utilitaire selon la revendication 3 ou 4, **caractérisée en ce que** les deux étages d'engrenages (221, 222) du deuxième dispositif d'engrenage (22) présentent un rapport de démultiplication identique ou approximativement identique de l'ordre de 1:18 à 1:25.

6. Direction de véhicule utilitaire selon l'une des revendications 1 à 5, **caractérisée en ce que** le moteur électrique (20) est disposé de manière coaxiale par rapport à l'arbre de sortie (19).

7. Direction de véhicule utilitaire selon la revendication 1 ou 2, **caractérisée en ce que** le deuxième dispositif à engrenage (22) comprend, entre le moteur électrique (20) et l'engrenage coaxial à démultiplication élevée (221), un étage d'engrenage (27) sous la forme d'une transmission par courroie, d'un engrenage planétaire, d'un engrenage à roues coniques ou d'un engrenage hypoïde réducteur.

8. Direction de véhicule utilitaire selon l'une des revendications 1, 2 ou 8, **caractérisée en ce que** le deuxième dispositif à engrenage (22) comprend, entre le moteur électrique (20) et l'engrenage coaxial à démultiplication élevée (221), un étage d'engrenage (27) supplémentaire, l'engrenage coaxial à démultiplication élevée (221) présentant un rapport de démultiplication réducteur supérieur à 1:60 et l'étage d'engrenage supplémentaire (27) branché en amont de celui-ci présentant un rapport de démultiplication réducteur inférieur à 1:8.

9. Direction de véhicule utilitaire selon l'une des revendications 1 à 8, **caractérisée en ce que**, sur l'arbre de sortie (19), est fixée ou réalisée une structure de denture (218) en tant que composant du premier dispositif à engrenage (21).

10. Direction de véhicule utilitaire selon l'une des revendications 1 à 9, **caractérisée en ce que** le premier dispositif d'engrenage (21) comprend deux étages d'engrenages (211, 212), à savoir un premier étage d'engrenage (211) pour la transformation d'un mouvement de rotation de l'arbre de sortie (18) autour de son axe de rotation (A) en un mouvement de translation d'un organe intermédiaire (213), ainsi qu'un deuxième étage d'engrenage (212) pour la transformation du mouvement de translation de l'organe intermédiaire (213) en un mouvement de rotation de l'arbre de sortie (19) autour de son axe de rotation (B), le rapport de démultiplication du premier dispositif à engrenage (21) réducteur est de l'ordre de 1:10 à 1:40.

11. Direction de véhicule utilitaire selon l'une des revendications 1 à 9, **caractérisée en ce que** le premier dispositif d'engrenage (21) comprend exactement un étage d'engrenage (211), qui transforme un mouvement de rotation de l'arbre d'entrée (18) autour de son axe de rotation (A) en un mouvement de rotation de l'arbre de sortie (19) autour de son axe de rotation (B).

12. Direction de véhicule utilitaire selon la revendication 11, **caractérisée en ce que** le seul étage d'engrenage (211) du premier dispositif à engrenage (21) est un entraînement à vis sans fin, un engrenage à roues coniques ou un engrenage hypoïde.

13. Direction de véhicule utilitaire selon l'une des revendications 1 à 12, **caractérisée en ce que**, sur l'arbre d'entrée (18), côté entrée, est disposé un dispositif de mesure de couple (23).

14. Direction de véhicule utilitaire selon l'une des revendications 1 à 13, **caractérisée en ce qu'**un boîtier de mécanisme de direction (17) loge l'arbre d'entrée (18), l'arbre de sortie (19), le premier dispositif à engrenage (21) et au moins l'engrenage coaxial à démultiplication élevée (221) du deuxième dispositif à engrenage (22).

15. Direction de véhicule utilitaire selon l'une des revendications 1 à 14, **caractérisée en ce que** le moteur électrique (20) est logé dans le boîtier de mécanisme de direction (17).

16. Direction de véhicule utilitaire selon l'une des revendications 1 à 15, **caractérisée en ce que** des parties du moteur électrique (20) sont constituées de parties du boîtier de mécanisme de direction (17).

17. Direction de véhicule utilitaire selon l'une des revendications 1 à 16, **caractérisée en ce que** le moteur électrique (20) comprend un stator avec au moins deux groupes de spires électriquement séparés, qui sont contrôlés chacun par leur propre dispositif de commande électronique (26).

18. Direction de véhicule utilitaire selon l'une des revendications 1 à 17, **caractérisée en ce que** l'assistance de direction est générée sur l'ensemble du domaine de fonctionnement uniquement par le seul moteur électrique (20).

19. Direction de véhicule utilitaire selon l'une des revendications 1 à 18, **caractérisée en ce que** l'assistance de direction est générée sur l'ensemble du domaine de fonctionnement exclusivement de manière électrique.

20. Direction de véhicule utilitaire selon l'une des revendications 1 à 19, **caractérisée en ce que** l'étage d'engrenage, par l'intermédiaire duquel le premier dispositif à engrenage (21) s'emboîte avec l'arbre de sortie (19), présente un rapport démultiplication variable de façon à ce que, dans une zone plus proche du centre de la direction, les mouvements de direction sur le volant (12) provoquent des braquages de roues plus importants que les mouvements de direction dans une zone plus éloignée du centre.
